# EUROPÄISCHE PATENTSCHRIFT

(11) **EP 3 916 276 B1**
(45) Veröffentlichungstag und Bekanntmachung des Hinweises auf die Patenterteilung: **20.08.2025**
(21) Anmeldenummer: 21174619.3
(22) Anmeldetag: 19.05.2021
(51) Int. Cl.: F16K 11/044, F16K 11/22

(54) **VENTILEINRICHTUNG UND WASSERABRASIV-SUSPENSIONSSCHNEIDEEINRICHTUNG**
VALVE DEVICE AND WATER ABRASIVE SUSPENSION CUTTING DEVICE
DISPOSITIF SOUPAPE ET DISPOSITIF DE COUPE PAR SUSPENSION AQUEUSE ABRASIVE

(30) Priorität: 28.05.2020 DE 102020114338
(43) Veröffentlichungstag der Anmeldung: 01.12.2021
(73) Patentinhaber: Gottfried Wilhelm Leibniz Universität Hannover, 30167 Hannover (DE)
(72) Erfinder: MAIER, Prof. Dr. Hans-Jürgen, 31535 Neustadt a. Rbge. (DE); HASSEL, Dr. Thomas, 30419 Hannover (DE); MLINARIC, Markus, 30171 Hannover (DE); BUSCHE, Lennart, 30167 Hannover (DE)
(74) Vertreter: Kröncke, Rolf

(56) Entgegenhaltungen:
- DE-B4- 102014 100 839
- US-A- 4 565 217
- US-A1- 2010 276 022

## Beschreibung

Die Erfindung betrifft eine Wasserabrasiv-Suspensionsschneideeinrichtung gemäß dem Oberbegriff des Anspruchs 1.

Allgemein betrifft die Erfindung das Gebiet des Wasserstrahlschneidens. Die Wasserstrahlschneidtechnologie ist aufgrund ihrer flexiblen Einsatzmöglichkeiten bereits vielfach im Einsatz. Das Wasserabrasiv-Suspensionsschneiden eignet sich insbesondere als bevorzugtes Schneidverfahren für radioaktiv kontaminierte Gegenstände, weil die Wasserstrahlschneidtechnologie auch unter Wasser eingesetzt werden kann. Damit eignet sich diese Technologie z. B. für den Rückbau von Kernkraftwerken sowie den Unterwassereinsatz an Offshore-Anlagen.

Beim Wasserstrahlschneiden wird das zu bearbeitende Material durch einen Hochdruckwasserstrahl getrennt. Es wird unterschieden zwischen dem Reinwasserschneiden und dem Wasserabrasivstrahlschneiden. Beim Reinwasserschneiden wird reines Wasser mit einer bestimmten Wasserqualität eingesetzt. Hierbei wird die Strahlenergie des Wassers zum Schneiden ausgenutzt. Die Schneidleistung in harten Materialien ist dabei relativ begrenzt. Um die Schneidleistung zu erhöhen, wird das Wasserabrasivstrahlschneiden eingesetzt. Hierbei wird dem reinen Wasser ein Schneidmittel, das sogenannte Abrasivmittel oder nur Abrasiv, hinzugefügt. Als Abrasivmittel kann z. B. Granat oder Korund eingesetzt werden.

Beim Wasserabrasivstrahlschneiden wird weiter unterschieden zwischen dem Wasserabrasiv-Injektionsschneiden und dem Wasserabrasiv-Suspensionsschneiden. Beim Wasserabrasiv-Injektionsschneiden wird das Abrasivmittel dem bereits gebündelten Wasserstrahl hinzugefügt. Bevor der gebündelte Wasserstrahl auf das zu schneidende Material trifft, wird in einer Mischkammer das Abrasivmittel hinzugefügt. Das Abrasivmittel wird dabei durch den Wasserstrahl mitgerissen. Hierbei ergibt sich der Nachteil, dass dem aus einer Schneiddüse austretenden Schneidstrahl Luft beigemischt sind. So wird z. B. bei der Beimischung von Abrasivmitteln in den Schneidstrahl bei einem Luftanteil bis zu 20% die Schneidleistung um bis zu 15% vermindert.

Beim Wasserabrasiv-Suspensionsschneiden wird dagegen das Abrasivmittel unter Luftausschluss dem Reinwasser zugemischt. Hierdurch können höhere Schneidleistungen erzielt werden und größere Materialstärken und nahezu alle Materialien durchtrennt werden. Das Verfahren eignet sich wegen des Vermeidens von Sauerstoff- und anderen Gaseinschlüssen im Schneidstrahl auch besonders gut für Unterwasser-Schneidvorgänge und damit für den Rückbau von Kernkraftwerken. Insbesondere können hierdurch entstehende und später zu entsorgende Aerosole vermieden werden.

Bei solchen Wasserabrasiv-Suspensionsschneideeinrichtungen ist das Starten und Stoppen des Schneidvorgangs entweder gar nicht oder zumindest nicht so einfach möglich, da die hieran beteiligten Bauteile durch das Abrasiv geschädigt werden können bzw. ein Stoppen durch die Anwesenheit des Abrasivs gar nicht möglich ist. Aus der DE 10 2014 100 839 B4 geht bereits ein Vorschlag zur Lösung dieser Problematik hervor.

Aus US 4,565,217 und US 2010/0276022 A1 gehen Ventileinrichtungen für Niederdruckanwendungen hervor, die für das Gebiet des Wasserabrasiv-Suspensionsschneidens ungeeignet sind.

Bei solchen Wasserabrasiv-Suspensionsschneideeinrichtungen wird vorzugsweise mit einem sehr hohen Druck des Schneidstrahls gearbeitet, wobei Drücke über 1000 bar möglich sind, auch Drücke über 2000 bar, 3000 bar oder bis zu 6000 bar sind möglich. Aufgrund dieser hohen Drücke werden an eine Ventileinrichtung der eingangs genannten Art hohe Anforderungen gestellt.

Der vorliegenden Erfindung liegt die Aufgabe zugrunde, vorteilhafte konstruktive Lösungsmöglichkeiten für die Realisierung einer Ventileinrichtung zum wahlweisen Zuschalten oder Abschalten des Hochdruck-Schneidstrahls einer solchen Wasserabrasiv-Suspensionsschneideeinrichtung anzugeben. Ferner soll eine entsprechende Wasserabrasiv-Suspensionsschneideeinrichtung angegeben werden.

Diese Aufgabe wird mit einer Wasserabrasiv-Suspensionschneideeinrichtung gemäß Anspruch 1 gelöst. Dies beinhaltet, dass die Ventileinrichtung wenigstens ein Sitzventil und/oder wenigstens ein Schieberventil und/oder wenigstens ein Kugelventil aufweist, mit dem der Hochdruck-Schneidstrahl wahlweise zuschaltbar oder abschaltbar ist. Durch solche Bauteile wie Sitzventil, Schieberventil und/oder Kugelventil können insbesondere die aus dem zuvor genannten Stand der Technik bekannten Strömungsunterbrecher zuverlässig und verschleißarm realisiert werden. Mit der erfindungsgemäßen Ventileinrichtung wird es möglich, dass der Anwender auf einfache Weise wahlweise den Hochdruck-Schneidstrahl zuschalten oder abschalten kann.

Dabei muss das Abschalten des Hochdruck-Schneidstrahls nicht unbedingt vollständig erfolgen, es kann auch eine deutliche Drosselung durchgeführt werden. Wenn der Hochdruck-Schneidstrahl unterbrochen oder erheblich gedrosselt ist, wird im Wesentlichen nichts mehr über die Schneiddüse nach außen abgegeben. Dieser Betriebszustand der Wasserabrasiv-Suspensionsschneideeinrichtung wird als Nichtschneidebetrieb bezeichnet. Wenn das abrasivhaltige Schneidmedium als Hochdruck-Schneidstrahl über die Schneiddüse abgegeben wird, befindet sich die Wasserabrasiv-Suspensionsschneideeinrichtung im Betriebsmodus Schneidebetrieb. Durch die erfindungsgemäße Ventileinrichtung ist ein Wechsel zwischen Schneidebetrieb und Nichtschneidebetrieb schnell und ohne lange Übergangszeiten möglich.

Die Erfindung eignet sich für das Wasserabrasiv-Suspensionsschneiden in allen Druckbereichen, insbesondere auch für den Hochdruckbereich mit Drücken oberhalb von 1.000 bar. Damit steht ein effizientes Schneidverfahren auch für besonders harte Werkstücke und Werkstücke mit hoher Materialdicke zur Verfügung.

Bei einem Sitzventil wird der Ventilkörper (Dichtkörper) in einem bestimmten Winkel auf einen Ventilsitz (Dichtfläche) zubewegt. Bei einem Schieberventil ist der Ventilkörper als Schieber ausgebildet, der sich tangential an der Dichtfläche entlang bewegt. Bei einem Kugelventil ist als Ventilkörper eine Ventilkugel vorhanden, die einen oder mehrere Durchströmkanäle hat, durch die das mittels des Ventils zu beeinflussende Medium je nach Ventilstellung hindurchströmen kann. Der Ventilkörper wird auch als Dichtkörper oder Absperrkörper bezeichnet.

Die Ventileinrichtung kann z. B. eine offene und eine geschlossene Schaltstellung aufweisen. **In** der offenen Schaltstellung wird das abrasivhaltige Schneidmedium zur Schneiddüse transportiert. **In** der geschlossenen Schaltstellung wird die Zufuhr des abrasivhaltigen Schneidmediums oder jeglicher anderen Flüssigkeit zur Schneiddüse unterbrochen oder zumindest erheblich gedrosselt.

Der Abrasivmittelbehälter einer die Ventileinrichtung aufweisenden Wasserabrasiv-Suspensionsschneideeinrichtung kann dabei bereits eine Mischung aus dem Abrasivmittel und einer Flüssigkeit, z. B. reinem Wasser, enthalten. Es ist vorteilhaft, dabei Gaseinschlüsse im Abrasivmittelbehälter zu vermeiden. Das über die Ventileinrichtung zur Schneiddüse geführte Gemisch, d.h. das abrasivhaltige Schneidmedium, kann dabei ein Gemisch aus dem Reinwasser und dem Abrasivmittel, gegebenenfalls noch mit einer anderen Flüssigkeit, in beliebiger Art sein, insbesondere eine Suspension. Allgemein gesagt muss es sich bei dem Gemisch nicht um eine Suspension im in der Chemie benutzten engeren Sinne des Begriffs handeln, sondern es kann jegliche Art von Gemischen sein. So kann zur Steigerung der Schneidleistung eine Zugabe von langkettigen Polymeren zur Suspension erfolgen.

Als Reinwasser wird dabei jegliches Wasser in der für das Wasserstrahlschneiden ausreichenden Qualität verstanden, das keine Abrasivmittel-Partikel oder diese zumindest nicht in praxisrelevanter Konzentration aufweist.

Gemäß einer vorteilhaften Ausgestaltung der Erfindung ist vorgesehen, dass die Ventileinrichtung eine Betätigungsstange aufweist, durch die ein Ventilkörper des wenigstens einen Sitzventils und/oder wenigstens einen Schieberventils und/oder wenigstens einen Kugelventils mit einem Ventilsteuerelement mechanisch gekoppelt ist, durch das der Ventilkörper von entfernter Stelle in unterschiedliche Öffnungs- und Schließstellungen der Ventileinrichtung stellbar ist. Dies hat den Vorteil, dass der Ventilkörper mittels der Betätigungsstange sozusagen fernbetätigbar ist. Dies erlaubt eine vorteilhafte konstruktive Lösung für die Ventileinrichtung, da das Ventilsteuerelement, z.B. ein fremdkraftbetätigtes Ventilsteuerelement, nicht in unmittelbarer Nähe des Ventilkörpers angeordnet sein muss. Durch die Betätigungsstange kann somit der Ventilkörper bewegt werden. Beispielsweise kann die Betätigungsstange zur Ausführung einer Längsbewegung in Längsrichtung der Betätigungsstange und/oder zur Ausführung einer Drehbewegung um die Längsachse (Rotationsachse) der Betätigungsstange eingerichtet sein. Auf diese Weise lassen sich Ventilkörper aller genannten Arten von Ventilen vorteilhaft von entfernter Stelle betätigen. Die Betätigungsstange kann z.B. nadelförmig ausgebildet sein, d.h. als längliches Bauteil mit geringem Querschnitt. Die Betätigungsstange kann insbesondere als am Außenumfang zylindrische Betätigungsstange ausgebildet sein. Die Betätigungsstange kann aus einem Metallmaterial bestehen, z.B. aus Stahl oder Titan. Besonders vorteilhaft ist ein korrosionsgeschützter Stahl, wie z.B. hartverchromter hochfester Stahl.

Das Ventilsteuerelement kann ein manuelles Betätigungselement sein, wenn die Ventileinrichtung bzw. das Sitzventil, Schieberventil und/oder Kugelventil für eine manuelle Verstellung ausgebildet ist. Das Ventilsteuerelement kann auch ein fremdkraftbetätigtes Steuerelement sein oder mit einem solchen fremdkraftbetätigten Steuerelement verbunden sein, z.B. mit einem pneumatischen, hydraulischen und/oder elektrischen Antrieb. Im Falle einer in Längsrichtung beweglichen Betätigungsstange kann das Steuerelement z.B. ein Linearantrieb sein, z.B. mit einem doppelt wirkenden pneumatischen oder hydraulischen Zylinder. Hierüber lässt sich auch die Spül- bzw. Schaltzeit stufenlos steuern.

Gemäß einer vorteilhaften Ausgestaltung der Erfindung ist vorgesehen, dass die Ventileinrichtung ein Linearlager Linearlageraufweist, durch das die Betätigungsstange an einer Position, die näher am Ventilkörper als am Ventilsteuerelement angeordnet ist, in radialer Richtung gelagert ist. Dies hat den Vorteil, dass die Betätigungsstange an einer dem Ventilkörper nahen Position zusätzlich abgestützt ist. Auf diese Weise kann die Betätigungsstange besser Druckkräfte übertragen, ohne dass die Gefahr des Einknickens auftritt. Durch das Linearlager kann die Betätigungsstange beispielsweise in Längsbewegungsrichtung und/oder in Drehbewegungsrichtung um ihre Längsachse gelagert und abgestützt sein. Das Linearlager kann z.B. in Form einer die Betätigungsstange umgebenden Lagerbuchse ausgebildet sein, die an einem Gehäuseteil der Ventileinrichtung befestigt ist. Das Linearlager kann auch ganz oder teilweise durch am Außenumfang der Betätigungsstange angeordnete Lagerelemente gebildet sein, die sich an einer Innenwandung eines die Betätigungsstange umgebenden Gehäusebauteils der Ventileinrichtung abstützen können. Das Linearlager kann z.B. als Gleitlager oder Wälzkörperlager ausgebildet sein.

Gemäß einer vorteilhaften Ausgestaltung der Erfindung ist vorgesehen, dass das Linearlager einen oder mehrere in Längsrichtung der Betätigungsstange verlaufende Durchgangskanäle aufweist, durch die über den zweiten Zuführanschluss zugeführtes Reinwasser zum Ventilkörper strömen kann. Dies hat den Vorteil, dass der zweite Zuführanschluss an einer vom ersten Zuführanschluss entfernten Position am Gehäuse der Ventileinrichtung angeordnet sein kann, die insbesondere auf der anderen Seite des Linearlagers angeordnet sein kann. Das Reinwasser kann dann trotzdem durch das Linearlager bzw. durch dessen Durchgangskanäle zum Ventilkörper und zu einer Ventilkammer, in der der Ventilkörper angeordnet ist, gelangen.

Der zweite Zuführanschluss kann auch dann, wenn das Linearlager keine solchen Durchgangskanäle aufweist, an einer vom ersten Zuführanschluss entfernten Stelle am Gehäuse der Ventileinrichtung angeordnet sein, vergleichbar wie zuvor erläutert. In diesem Fall ist es vorteilhaft, im Gehäuse der Ventileinrichtung einen oder mehrere Durchgangskanäle vorzusehen, die das Linearlager nach Art eines Bypasses überbrücken, sodass das Reinwasser vom zweiten Zuführanschluss über solche im Gehäuse vorgesehenen Durchgangskanäle zum Ventilkörper gelangen kann.

Gemäß einer vorteilhaften Ausgestaltung der Erfindung ist vorgesehen, dass die Durchgangskanäle spiralförmig um den Außenumfang der Betätigungsstange verlaufend angeordnet sind. Auf diese Weise kann eine gleichmäßige Abstützung der Betätigungsstange durch das Linearlager über eine gewisse Führungslänge realisiert werden. Hierdurch ist die Linearlager-bedingte Stützwirkung für die Betätigungsstange schraubenförmig über den äußeren Umfang der Betätigungsstange verteilt.

Gemäß einer vorteilhaften Ausgestaltung der Erfindung ist vorgesehen, dass die Ventileinrichtung, insbesondere der Ventilkörper, wenigstens eine erste Ventilstellung, in der der erste Zuführanschluss mit dem Auslassanschluss verbunden ist und der zweite Zuführanschluss abgesperrt ist, und eine zweite Ventilstellung aufweist, in der der Auslassanschluss gegenüber dem ersten und dem zweiten Zuführanschluss abgesperrt ist. Die erste Ventilstellung dient somit zur Realisierung des Schneidebetriebs der Wasserabrasiv-Suspensionsschneideeinrichtung, die zweite Ventilstellung zur Realisierung des Nichtschneidebetriebs.

Gemäß einer vorteilhaften Ausgestaltung der Erfindung ist vorgesehen, dass die Ventileinrichtung, insbesondere der Ventilkörper, wenigstens eine dritte Ventilstellung aufweist, in der der erste Zuführanschluss, der zweite Zuführanschluss und der Auslassanschluss miteinander verbunden sind. Auf diese Weise wird eine Art Zwischenstellung der Ventileinrichtung realisiert, in der durch Zuführung von Reinwasser über den zweiten Zuführanschluss der Bereich des Ventilkörpers, insbesondere eine den Ventilkörper umgebende Ventilkammer, gereinigt und vom Abrasiv des Schneidmediums weitgehend befreit werden kann. Es kann ein Spülvorgang im Bereich des Ventilkörpers der Ventileinrichtung durchgeführt werden, wie in DE 10 2014 100 839 B4 vorgeschlagen.

Die Ventileinrichtung kann eine Ventilkammer aufweisen, in der der Ventilkörper angeordnet ist. In diesem Fall münden der erste Zuführanschluss, der zweite Zuführanschluss und der Auslassanschluss in die Ventilkammer. Die Ventilkammer kann z.B. als zylindrische Bohrung ausgebildet sein oder eine sphärische oder ellipsoide Form aufweisen. Durch solche Formgebungen kann der zuvor erwähnte Spülvorgang günstig beeinflusst werden.

Gemäß einer vorteilhaften Ausgestaltung der Erfindung ist vorgesehen, dass der Ventilkörper in der Ventilkammer hin und her bewegbar ist. Der Ventilkörper kann dabei durch die Betätigungsstange bewegt werden.

Gemäß einer vorteilhaften Ausgestaltung der Erfindung ist vorgesehen, dass in der Ventilkammer wenigstens eine Schutzwand vorhanden ist, durch die der Ventilkörper in zumindest einer Ventilstellung gegenüber dem über den ersten Zuführanschluss zugeführten abrasivhaltigen Schneidmedium abgedeckt ist. Auf diese Weise wird der Ventilkörper vor Verschleiß geschützt, wenn sich die Wasserabrasiv-Suspensionsschneideeinrichtung im Schneidebetrieb befindet. Insbesondere wird vermieden, dass das abrasivhaltige Schneidmedium in übermäßigem Umfang den Ventilkörper schädigen kann. Die Schutzwand kann z.B. als ringförmige Schutzwand ausgebildet sein, die den Ventilkörper umfangsseitig umlaufend umgibt.

Gemäß einer vorteilhaften Ausgestaltung der Erfindung ist vorgesehen, dass das Sitzventil wenigstens einen ersten Ventilsitz und einen ersten Ventilkörper mit wenigstens einer dem ersten Ventilsitz zugeordneten ersten konusförmigen Ventilschließfläche aufweist. Der erste Ventilsitz kann z.B. im Wesentlichen zylindrisch mit einer scharfen, nicht abgerundeten oder angefasten ringförmigen Kante ausgebildet sein. Dadurch entsteht bei geschlossenem Ventil ein linienförmiger Umfangskontakt des ersten Ventilsitzes an der ersten konusförmigen Ventilschließfläche. Dies erlaubt ein zuverlässiges Verschließen des Ventils durch Anlage der ersten konusförmigen Ventilschließfläche am ersten Ventilsitz. Durch die Konusform kann ein sicherer Schließzustand des Ventils auch bei den bei einer solchen Wasserabrasiv-Suspensionsschneideeinrichtung auftretenden Differenzdrücken erreicht werden, die z.B. im Bereich von mehreren hundert bis einigen tausend Bar liegen können.

Gemäß einer vorteilhaften Ausgestaltung der Erfindung ist vorgesehen, dass das Sitzventil einen zweiten Ventilsitz und eine dem zweiten Ventilsitz zugeordnete zweite konusförmige Ventilschließfläche aufweist, die an dem ersten Ventilkörper oder an einem zweiten Ventilkörper angeordnet ist. Auf diese Weise kann der erste Ventilkörper als doppelseitiger Ventilkörper, d.h. mit erster und zweiter konusförmiger Ventilschließfläche ausgebildet sein. Alternativ kann die Ventileinrichtung mit zwei Ventilkörpern (erster und zweiter Ventilkörper) ausgebildet sein, die z.B. nach Art von zwei 2/2-Wegeventilen miteinander verschaltet sein können, um die Funktion eines 3/2-Wegeventils oder eines 3/3-Wegeventils zu realisieren. Der zweite Ventilsitz kann z.B. im Wesentlichen zylindrisch mit einer scharfen, nicht abgerundeten oder angefasten ringförmigen Kante ausgebildet sein. Dadurch entsteht bei geschlossenem Ventil ein linienförmiger Umfangskontakt des zweiten Ventilsitzes an der zweiten konusförmigen Ventilschließfläche. Der Ventilkörper kann im Querschnitt z.B. eine Tropfenform aufweisen.

Durch die konischen Ventilschließflächen kann eine gute Dichtwirkung auch bei dem hohen Wasserdruck, wie er bei einer Wasserabrasiv-Suspensionsschneideeinrichtung auftritt, sichergestellt werden. Dabei kann ein jeweiliger Ventilsitz und eine dem Ventilsitz zugeordnete Ventilschließfläche vorteilhaft aus Metall gebildet sein, sodass die einander zugeordneten Dichtflächen eine Metall-auf-Metall-Verbindung ergeben. Auf diese Weise kann die Ventileinrichtung besonders hochdruckfest realisiert werden.

Gemäß einer vorteilhaften Ausgestaltung der Erfindung ist vorgesehen, dass der erste und/oder der zweite Ventilsitz und/oder der erste und/oder der zweite Ventilkörper als jeweilige separate Bauteile ausgeführt sind, die lösbar an wenigstens einem weiteren Bauteil der Ventileinrichtung befestigt sind. Dies hat den Vorteil, dass diese Bauteile bei Bedarf, z.B. im Verschleißfall, einfach ausgetauscht und ersetzt werden können. Diese separaten Bauteile können beispielsweise mittels einer Verschraubung und/oder einer Verrastung an einem weiteren Bauteil der Ventileinrichtung, z.B. an einem Gehäuseteil, befestigt sein.

Hierdurch können diese separaten Bauteile Ventilsitz/Ventilkörper auch aus jeweils unterschiedlichen Materialien gebildet sein, oder aus bzgl. der anderen Teile der Ventileinrichtung anderen Materialien. Beispielsweise kann die Ventileinrichtung überwiegend aus Metallbauteilen bestehen. Die als separate Bauteile ausgeführten Ventilkörper/Ventilsitze können dann aus einem anderen Material, z.B. aus Keramik oder Hartmetall, bestehen.

Vorgeschlagen wird eine Wasserabrasiv-Suspensionsschneideeinrichtung, die wenigstens eine Druckerzeugungseinrichtung zur Erzeugung eines gewünschten Wasserdrucks des Hochdruck-Schneidstrahls, wenigstens einen Wasserzulauf zur Zuführung von Reinwasser, wenigstens einen Abrasivmittelbehälter mit Abrasivmittel, wenigstens eine Schneiddüse zum Abgeben des Hochdruck-Schneidstrahls zum Wasserabrasiv-Suspensionschneiden und wenigstens eine Ventileinrichtung nach einem der zuvor erläuterten Art hat, wobei der erste Zuführanschluss mit dem Abrasivmittelbehälter oder einer Zuführleitung für das abrasivhaltige Schneidmedium verbunden ist, der zweite Zuführanschluss mit dem Wasserzulauf verbunden ist und der Auslassanschluss mit der Schneiddüse verbunden ist.

Die Erfindung wird nachfolgend anhand von Ausführungsbeispielen unter Verwendung von Zeichnungen näher erläutert. Es zeigen:
- Figur 1 -: eine Wasserabrasiv-Suspensionsschneideeinrichtung in schematischer Darstellung und
- Figur 2-: eine erste Ausführungsform der Ventileinrichtung mit einem Sitzventil und
- Figur 3 -: eine zweite Ausführungsform der Ventileinrichtung mit einem Schieberventil und
- Figur 4-: eine dritte Ausführungsform der Ventileinrichtung mit zwei Sitzventilen und
- Figur 5 -: eine perspektivische Ansicht einer weiteren Ausführungsform einer Ventileinrichtung und
- Figur 6-: die Ventileinrichtung gemäß Figur 5 in einer Schnittdarstellung und
- Figur 7 -: den in Figur 6 markierten Ausschnitt A in vergrößerter seitlicher Schnittansicht und
- Figur 8 -: eine perspektivische Schnittdarstellung einer Linearlagerbuchse und
- Figur 9 -: den in Figur 6 markierten Ausschnitt A in vergrößerter perspektivischer Schnittdarstellung.

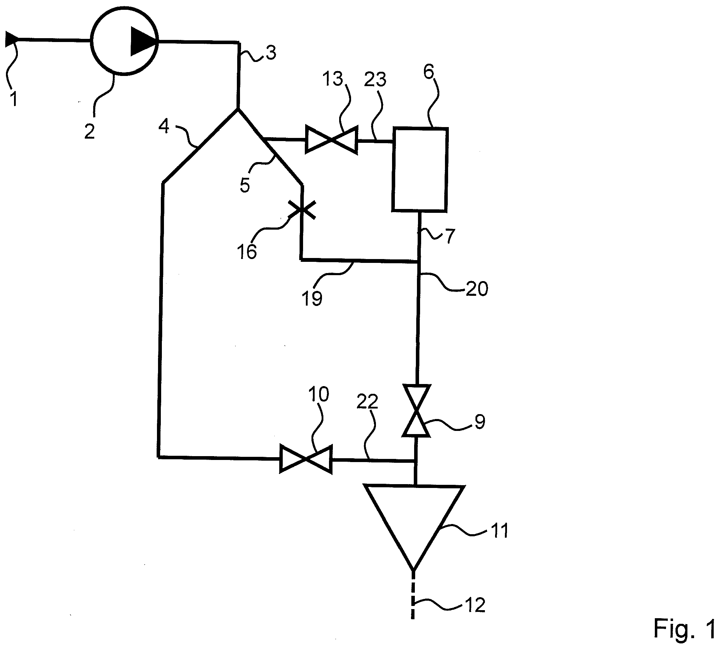

Die Wasserabrasiv-Suspensionsschneideeinrichtung gemäß Fig. 1 weist einen Wasserzulauf 1 zur Zuführung von Reinwasser auf. Der Wasserzulauf 1 ist über eine Rohrleitung mit einer Druckerzeugungseinrichtung 2 verbunden, z. B. einer Pumpe, insbesondere einer Hochdruckpumpe. Die Druckerzeugungseinrichtung 2 ist ausgangsseitig mit einer Rohrleitung 3 verbunden, in der das mittels der Druckerzeugungseinrichtung 2 unter Überdruck gesetzte, über den Zulauf 1 zugeführte Reinwasser abgegeben wird. Die Rohrleitung 3 mündet in weitere Rohrleitungen 4, 5, die von der Rohrleitung 3 verzweigen. Die Rohrleitung 5 ist hierbei die Hauptleitung, über die Reinwasser für den Schneidebetrieb weitergeführt wird. Zur Durchflussregulierung und damit der Anpassung der Abrasivbeladungkann in der Rohrleitung 5 eine Blende oder Drossel 16 angeordnet sein. Je nach Ausführung der Rohrleitungen, z. B. Länge und Querschnitt, kann die Blende oder Drossel 16 auch entfallen.

Über einen stromabwärts der Blende oder Drossel 16 angeordneten Abschnitt 19 der Hauptleitung 5 mündet diese, zusammen mit einer Rohrleitung 7, in eine Gemischleitung 20, über die im Schneidebetrieb das Gemisch aus Reinwasser und Abrasivmittel als abrasivhaltiges Schneidmedium zur Schneiddüse geführt wird. Über einen z. B. an der Hauptleitung 5 angeordneten Abzweig ist ein Abrasivmittelbehälter 6 über eine Rohrleitung 23 und einen zweiten Strömungsunterbrecher 13 mit dem über die Rohrleitung 3 abgegebenen, unter Überdruck stehenden Reinwasser verbindbar. Der zweite Strömungsunterbrecher 13 kann in einem geöffneten und einem geschlossenen Zustand betrieben werden. Ist der zweite Strömungsunterbrecher 13 geöffnet, setzt das unter Überdruck stehende Reinwasser über die Rohrleitung 23, die an einem Flüssigkeitszufuhranschluss des Abrasivmittelbehälters angeschlossen ist, das darin befindliche Abrasivmittel unter Druck. Durch den Druck wird das Abrasivmittel aus dem Abrasivmittelbehälter 6 über die Rohrleitung 7 abgegeben und mischt sich an der Verbindungsstelle des Abschnitts 19 der Hauptleitung 5 mit der Gemischleitung 20 mit dem Reinwasser zu dem über die Gemischleitung 20 zu führenden Gemisch. Die Zuführung von Abrasvimittel aus dem Abrasivmittelbehälter 6 kann durch Schließen des zweiten Strömungsunterbrechers 13 unterbrochen werden. Da nach dem Schließen des zweiten Strömungsunterbrechers 13 der am Flüssigkeitszufuhranschluss des Abrasivmittelbehälters anstehende Überdruck nicht mehr vorhanden ist, wird die Abgabe von Abrasivmittel über die Rohrleitung 7 beendet.

**In** der Gemischleitung 20 ist ein erster Strömungsunterbrecher 9 angeordnet. Das über die Gemischleitung 20 über den ersten Strömungsunterbrecher 9 geführte Gemisch wird der Schneiddüse 11 zugeführt und im Schneidebetrieb als Schneidstrahl 12 von der Schneiddüse 11 abgegeben.

Neben der bereits erläuterten Hauptleitung 5 zweigt die Rohrleitung 4 von der Rohrleitung 3 ab. Die Rohrleitung 4 ist eine Spülleitung, über die Reinwasser von der Druckerzeugungseinrichtung 2 über einen dritten Strömungsunterbrecher 10 und eine Rohrleitung 22 zu dem ersten Strömungsunterbrecher 9 geführt werden kann. Hierzu ist der dritte Strömungsunterbrecher 10, der ebenfalls einen geöffneten und einen geschlossenen Zustand aufweisen kann, zu öffnen. **In** diesem Fall wird zusätzlich über die Rohrleitung 21 das Reinwasser über die Schneiddüse 11 abgegeben, jedoch ohne das Abrasivmittel.

Die Wasserabrasiv-Suspensionsschneideeinrichtung gemäß Fig. 1 weist als Betriebsmodi wenigstens den Schneidebetrieb und den Nichtschneidebetrieb auf. Im Schneidebetrieb ist der dritte Strömungsunterbrecher 10 geschlossen, der erste und zweite Strömungsunterbrecher 9, 13 sind geöffnet. Im Schneidebetrieb findet damit im Wesentlichen kein Durchfluss durch die Spülleitung 4 statt. Über die Druckerzeugungseinrichtung 2 wird über den Wasserzulauf 1 zugeführtes Reinwasser unter Überdruck gesetzt und über die Hauptleitung 5 in die Gemischleitung 20 geführt, wo es mit dem über die Rohrleitung 7 zugeführten Abrasivmittel vermischt wird. Das Gemisch wird dann über die Schneiddüse 11 als Hochdruck-Schneidstrahl 12 abgegeben.

Soll vom Schneidebetrieb in den Nichtschneidebetrieb übergegangen werden, wird zunächst ein Spülvorgang des ersten Strömungsunterbrechers 9 durchgeführt, um Abrasivmittel-Partikel daraus zu entfernen. Der Spülvorgang kann z. B. dadurch erfolgen, dass der erste Strömungsunterbrecher 9 in seiner geöffneten Stellung verbleibt und der vierte Strömungsunterbrecher 10 geöffnet wird. In Folge der Druckverhältnisse, insbesondere beeinflusst durch die Blende oder Drossel 16, strömt dann das Reinwasser über die Spülleitung 4, den dritten Strömungsunterbrecher 10 und die Rohrleitung 22 und durchspült dabei den ersten Strömungsunterbrecher 9. Ist der Spülvorgang erfolgt, kann sodann der erste und der dritte Strömungsunterbrecher 9, 10 geschlossen werden. Wenn dabei die Druckerzeugungseinrichtung 2 unverändert weiterläuft, steigt der Druck in den Rohrleitungen an. Zur Vermeidung unzulässig hohen Drucks kann die durch die Druckerzeugungseinrichtung 2 hinzu geförderte Flüssigkeit durch Öffnen einen Ablaufventils abgeführt werden. Die Wasserabrasiv-Suspensionsschneideeinrichtung befindet sich dann im Nichtschneidebetrieb.

Dabei können der erste Strömungsunterbrecher 9 und der dritte Strömungsunterbrecher 10 baulich zu einer erfindungsgemäßen Ventileinrichtung zusammengefasst sein. Insbesondere können der erste Strömungsunterbrecher 9 und der dritte Strömungsunterbrecher 10 ein gemeinsames Gehäuse der Ventileinrichtung haben, über das Gehäuse einteilig oder mehrteilig ausgebildet sein kann.

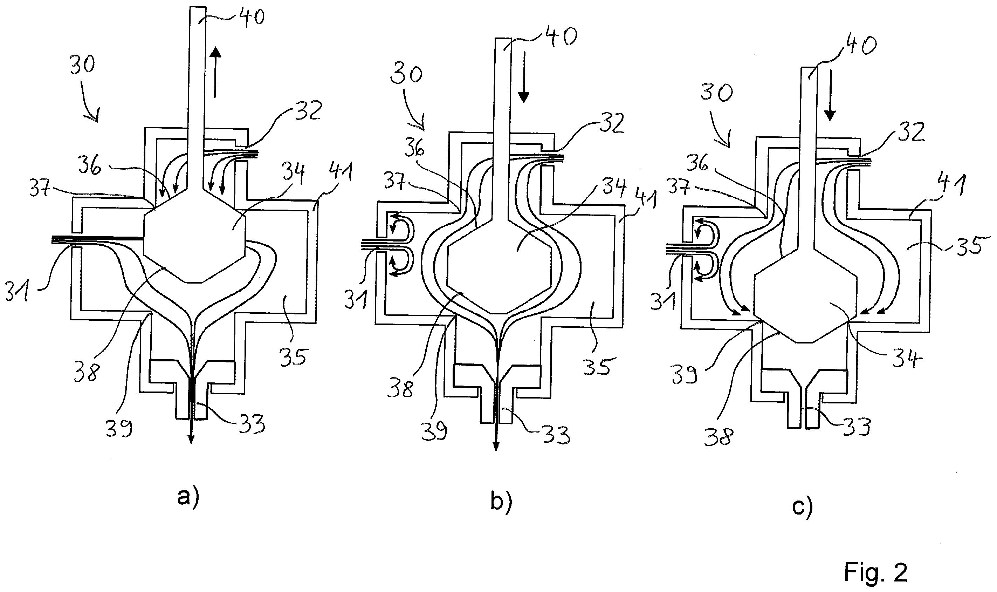

Die Figur 2 zeigt eine erste Ausführungsform einer erfindungsgemäßen Ventileinrichtung 30 in Form eines Sitzventils mit erstem Ventilsitz 39 und einem zweiten Ventilsitz 37. Der erste Ventilsitz 39 und der zweite Ventilsitz 37 können als im Wesentlichen zylindrische Öffnungen mit einer scharfen, nicht abgerundeten oder angefasten ringförmigen Kante an der Innenseite des Gehäuses 41 der Ventileinrichtung 30 ausgebildet sein. Der erste und der zweite Ventilsitz 37, 39 können auch als separate Bauteile ausgeführt sein, die lösbar an dem Gehäuse 41 befestigt sind. In dem Gehäuse 41 ist eine Ventilkammer 35 ausgebildet, in der ein Ventilkörper 34 beweglich angeordnet ist. Der Ventilkörper 34 ist über eine Betätigungsstange 40 mit einem Ventilsteuerelement mechanisch gekoppelt. Durch das Ventilsteuerelement kann der Ventilkörper 34 über die Betätigungsstange 40 in einer in diesem Fall vertikalen Richtung, wie durch die Pfeile dargestellt, hin- und her bewegt werden.

Der Ventilkörper 34 weist eine dem ersten Ventilsitz 39 zugeordnete konusförmige erste Ventilschließfläche 38 und eine dem zweiten Ventilsitz 37 zugeordnete, zweite konusförmige Ventilschließfläche 36 auf.

Die Ventileinrichtung 30 weist, z.B. an dem Gehäuse 41, einen ersten Zuführanschluss 31 auf, über den das abrasivhaltige Schneidmedium für das Wasserabrasiv-Suspensionsschneiden zugeführt werden kann. Der erste Zuführanschluss 31 kann z.B. mit der Gemischleitung 20 verbunden werden Die Ventileinrichtung 30 weist einen zweiten Zuführanschluss 32 zur Zuführung von Reinwasser auf, der z.B. mit der Spülleitung 4 verbunden werden kann. Die Ventileinrichtung 30 weist ferner einen Auslassanschluss 33 zur Ausgabe von über den ersten Zuführanschluss und den zweiten Zuführanschluss 31, 32 zugeführten Medien zur Schneiddüse 11 auf.

Die Ventileinrichtung 30 gemäß Figur 2 kann zumindest drei Ventilstellungen einnehmen, d.h. zumindest drei unterschiedliche Stellungen des Ventilkörpers 34 gegenüber den Ventilsitzen 37, 39. Die Figur 2a zeigt die Ventileinrichtung in einer ersten Ventilstellung a), in der der erste Zuführanschluss 31 mit dem Auslassanschluss 33 verbunden ist und dementsprechend die Wasserabrasiv-Suspensionsschneideeinrichtung im Schneidebetrieb betrieben werden kann. Dabei ist der zweite Zuführanschluss 32 gegenüber dem Auslassanschluss 33 bzw. der Ventilkammer 35 abgesperrt, da der Ventilkörper 34 mit der zweiten Ventilschließfläche 36 an dem zweiten Ventilsitz 37 anliegt und dementsprechend dort absperrt.

Gemäß Figur 2b befindet sich Ventileinrichtung 30 in einer dritten Ventilstellung b), die für den zuvor erläuterten Spülvorgang genutzt werden kann. In diesem Fall ist der Ventilkörper 34 innerhalb der Ventilkammer 35 zwischen den Ventilsitzen 37, 39 angeordnet, sodass das Reinwasser über den zweiten Zuführanschluss 32 in die Ventilkammer 35 und ggf. auch zum Auslassanschluss 33 gelangen kann. Durch das Spülen mit dem Reinwasser wird in der Ventilkammer 35 das abrasivhaltige Schneidmedium, das zuvor vom ersten Zuführanschluss 31 eingeströmt ist, fortgespült und insbesondere vom empfindlichen Ventilkörper 34 und den Ventilsitzen und Ventilschließflächen ferngehalten.

Die Figur 2c zeigt die Ventileinrichtung 30 in einer zweiten Ventilstellung c), in der der Auslassanschluss 33 gegenüber dem ersten und dem zweiten Zuführanschluss 31, 32 abgesperrt ist. In diesem Fall liegt die erste Ventilschließfläche 38 am ersten Ventilsitz 39 an. Eine mit der Ventileinrichtung 30 ausgestattete Wasserabrasiv-Suspensionsschneideeinrichtung ist nun im Nichtschneidebetrieb.

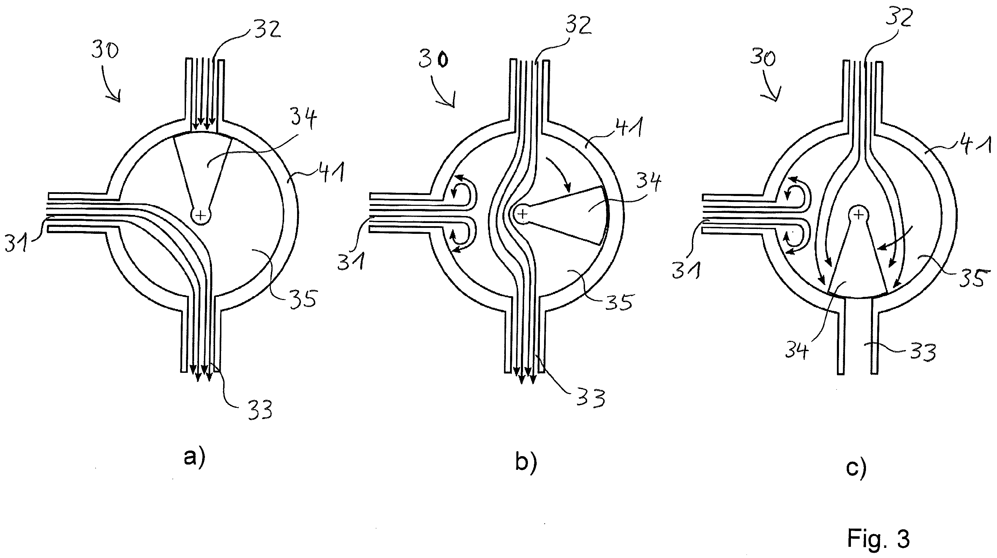

Die Figur 3 zeigt eine Ausführungsform der Ventileinrichtung 30 mit einem Schieberventil, das einen drehbar gelagerten Ventilschieber 34 aufweist, der entlang einer kreisringförmigen Querschnittsfläche in der Ventilkammer 35 entlang bewegt werden kann. Der Ventilschieber 34 kann z.B. mittels einer Betätigungsstange, die in Torsionsrichtung belastet ist, in der dargestellten Drehbewegung hin- und her bewegt werden. In Figur 3a befindet sich die Ventileinrichtung in der ersten Ventilstellung a) (Schneidebetrieb), in der Figur 3b in der dritten Ventilstellung b) (Spülvorgang), und in der Figur 3c in der zweiten Ventilstellung c) (Nichtschneidebetrieb). Im Übrigen hat die Ventileinrichtung 30 gemäß Figur 3 hinsichtlich der Stellungen des Ventilkörpers (Ventilschieber 34) und der Absperrfunktion der verschiedenen Öffnungen der Ventileinrichtung 30 die gleiche Funktion, wie anhand der Figur 2 erläutert.

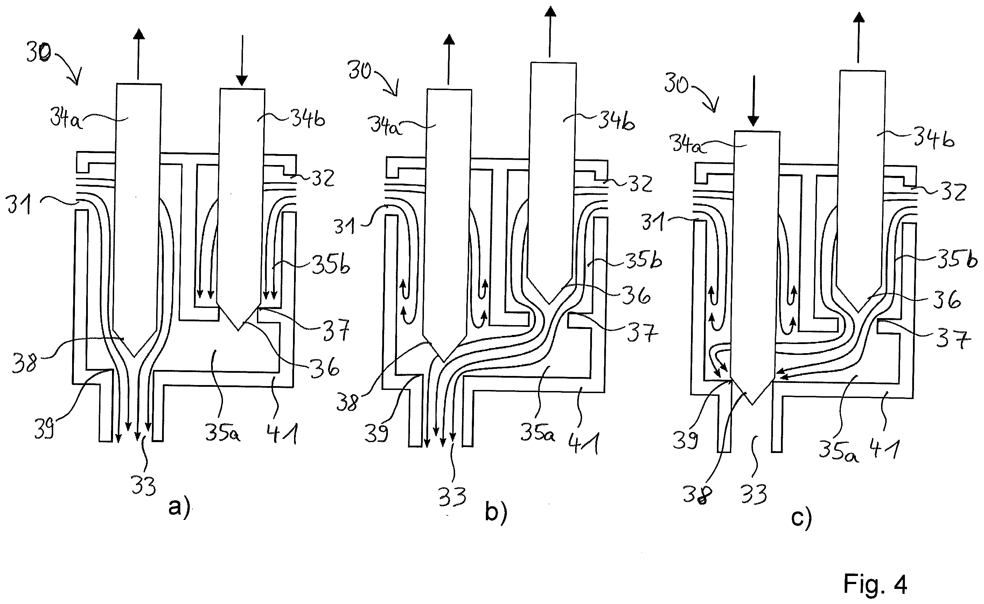

Die Figur 4 zeigt eine Ausführungsform der Ventileinrichtung 30 mit zwei Sitzventilen, die jeweils nur zwischen zwei diskreten Ventilstellungen hin- und her geschaltet werden können. Die jeweiligen Ventilkörper 34a, 34b können daher auch jeweils nur zwei Stellungen einnehmen.

Die Ventileinrichtung gemäß Figur 4 weist einen ersten Ventilkörper 34a und einen zweiten Ventilkörper 34b auf. Jeder dieser Ventilkörper 34a, 34b kann z.B. über eine eigene Betätigungsstange mechanisch betätigt werden. Der erste Ventilkörper 34a weist die erste konusförmige Ventilschließfläche 38 auf, die bei entsprechender Verstellung des ersten Ventilschließkörpers 34a mit dem ersten Ventilsitz 39 in Kontakt gebracht werden kann. Der zweite Ventilschließkörper 34b weist die zweite konusförmige Ventilschließfläche 36 auf, die bei entsprechender Betätigung des zweiten Ventilschließkörpers 34b mit dem zweiten Ventilsitz 37 in Kontakt gebracht werden kann. Der erste Ventilkörper 34a ist innerhalb einer ersten Ventilkammer 35a der Ventileinrichtung 30 bewegbar, der zweite Ventilkörper 34b ist in einer zweiten Ventilkammer 35b bewegbar. Durch das mit dem ersten Ventilkörper 34a und dem ersten Ventilsitz 39 gebildete erste Sitzventil kann der Auslassanschluss 33 geschlossen oder geöffnet werden. Durch das mit dem zweiten Ventilkörper 34b und dem zweiten Ventilsitz 37 gebildete zweite Sitzventil kann die Verbindung des zweiten Zuführanschlusses 32 zur ersten Ventilkammer 35a geschlossen oder geöffnet werden.

Die Figur 4a zeigt die Ventileinrichtung 30 wiederum in der ersten Ventilstellung a) (Schneidebetrieb), die Figur 3b in der dritten Ventilstellung b) (Spülvorgang), und die Figur 4c in der zweiten Ventilstellung c) (Nichtschneidebetrieb).

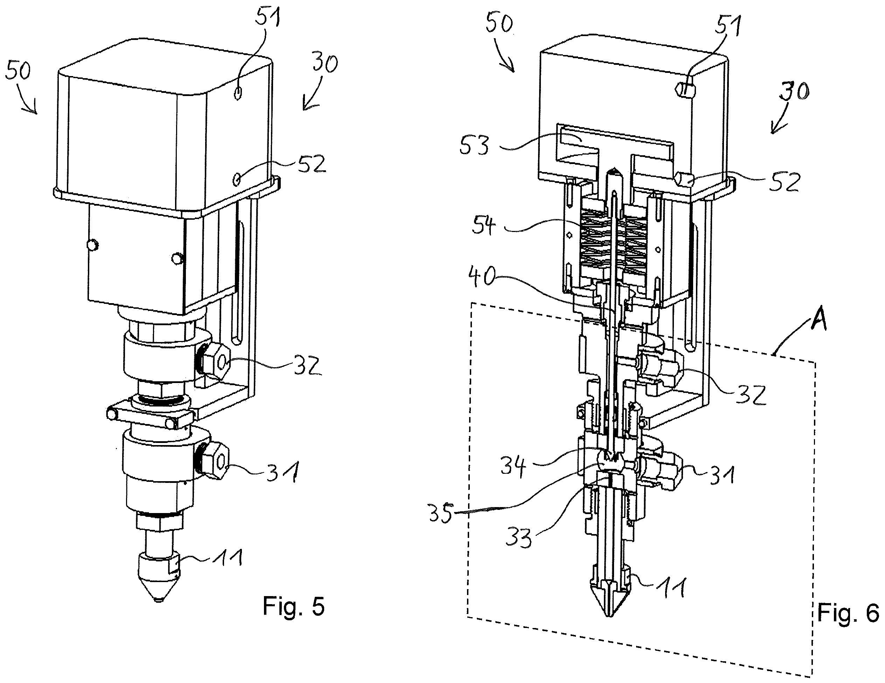

Anhand der weiteren Figuren 5 bis 9 wird eine konkretere konstruktive Ausgestaltung der Ventileinrichtung 30 beispielhaft erläutert. Die Ventileinrichtung 30 weist zusätzlich zu den bisher erläuterten Elementen einen Aktuator 50 auf, mit dem der Ventilkörper 34 über die Betätigungsstange 40 Fremdkraft-betätigt werden kann, z.B. durch automatische Steuerung oder auf Anforderung durch den Benutzer. Der Aktuator 50 ist hier beispielhaft mit einem doppelt wirkenden Kolbenantrieb, der einen Kolben 53 aufweist, dargestellt. Der Kolben 53 kann über zugeführtes pneumatisches oder hydraulisches Medium, das über Zuführanschlüsse 51, 52 zugeführt werden kann, wahlweise nach oben oder unten bewegt werden. Der Kolben 53 ist mechanisch mit der Betätigungsstange 40 gekoppelt. Zusätzlich kann zur Erzeugung einer bestimmten Stellkraft des Aktuators 50 noch eine Federanordnung 54 vorhanden sein, die die Bewegung des Kolbens 53 in zumindest einer Richtung unterstützt.

Erkennbar ist in den Figuren 5 und 6 wiederum der erste Zuführanschluss 31, der zweite Zuführanschluss 33, der Auslassanschluss 33 sowie der in der Ventilkammer 35 angeordnete Ventilkörper 34. An dem Auslassanschluss 33 ist zusätzlich die Schneiddüse 11 der Wasserabrasiv-Suspensionsschneideeinrichtung befestigt.

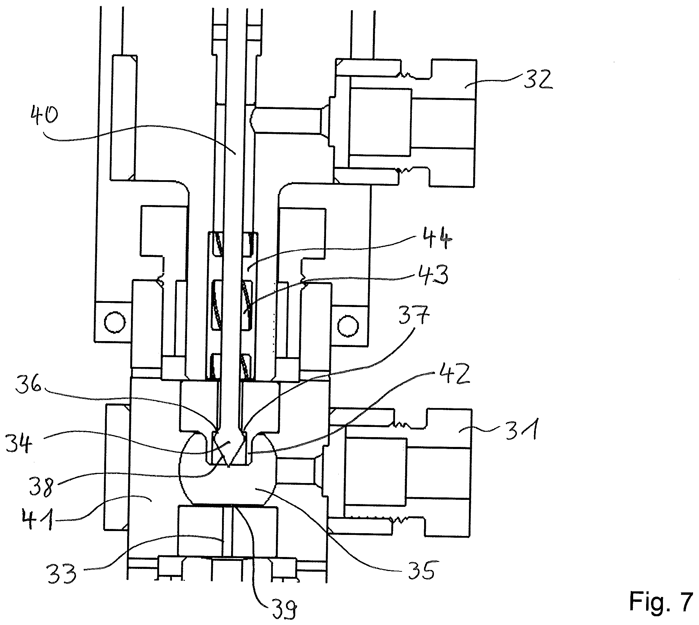

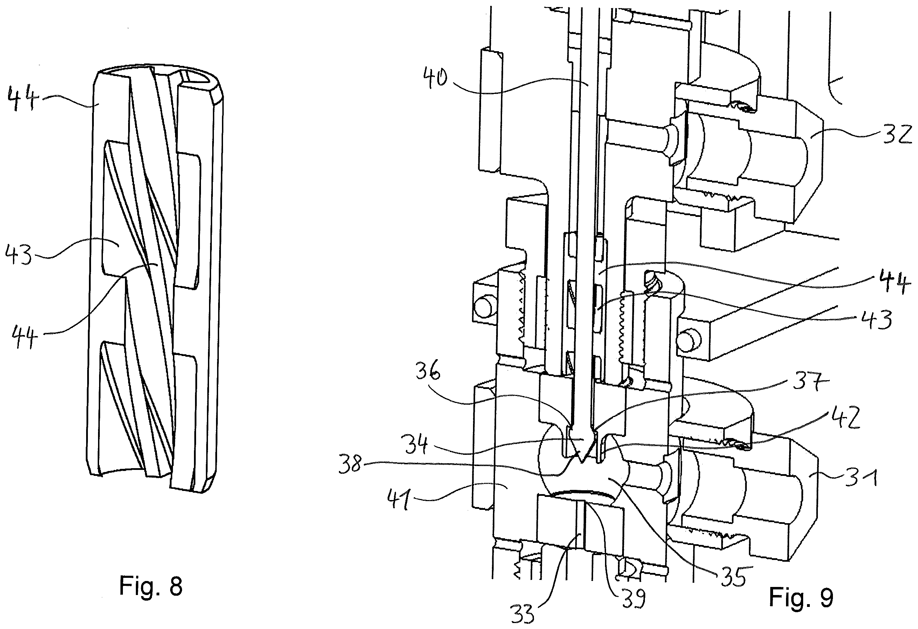

Die Figuren 7 und 9 zeigen den in Figur 6 markierten Bereich A in vergrößerter Darstellung. Erkennbar ist insbesondere der mit der Betätigungsstange 40 gekoppelte Ventilkörper 34, der im Querschnitt z.B. eine Tropfenform aufweisen kann. Der Ventilkörper 34 befindet sich in der Ventilkammer 35. Zum Schutz des Ventilkörpers 34 zumindest in der ersten Ventilstellung a) kann dieser zumindest weitgehend von einer Schutzwand 42 abgedeckt sein und so gegen das von rechts her über den ersten Zuführanschluss 31 im Schneidebetrieb einströmende abrasivhaltige Schneidmedium geschützt sein.

Da konstruktionsbedingt die Betätigungsstange 40 relativ schmal und lang ist und zum Halten des Sitzventils in der zweiten Ventilstellung c) der Ventilkörper 34 mit seiner ersten Ventilschließfläche 38 mit einer gewissen Druckkraft gegen den ersten Ventilsitz 39 gedrückt werden muss, können Knickkräfte auftreten, die zum Einknicken der Betätigungsstange 40 führen könnten. In der hier dargestellten Konstruktion ist zum Lagern und Abstützen der Betätigungsstange 40 im unteren Bereich, d.h. in der Nähe des Ventilkörpers 34, ein Linearlager 44 angeordnet. Das Linearlager 44 kann in Form einer Lagerbuchse ausgebildet sein, die als separates Bauteil hergestellt ist und in das entsprechende Gehäuseteil der Ventileinrichtung 30 eingesetzt ist. Um ein Durchströmen des über den Reinwasseranschluss 42 zugeführten Reinwassers zur Ventilkammer 35 zu ermöglichen, weist das Linearlager 44 einen oder mehrere in Längsrichtung der Betätigungsstange 40 verlaufende Durchgangskanäle 43 auf. Durch diese Durchgangskanäle 43 kann das Reinwasser zum Ventilkörper 34 bzw. zur Ventilkammer 35 strömen. Die Durchgangskanäle 43 können sich z.B. spiralförmig um den Außenumfang der Betätigungsstange 40 herum erstrecken.

Die Figur 8 zeigt beispielhaft ein als Lagerbuchse ausgebildetes Linearlager 44 mit den darin angeordneten spiralförmigen Durchgangskanälen 43. Es verbleiben innerhalb der Lagerbuchse spiralförmig verlaufende Innenstege 44, an denen die Betätigungsstange 40 entlang geführt ist und abgestützt ist. Hierdurch kann ein Einknicken der Betätigungsstange 40 auch bei auftretenden Druckkräften sicher vermieden werden.

Als Alternative zur Lagerbuchse, wie anhand der Figur 8 dargestellt, können am Außenumfang der Betätigungsstange 40 in dem Lagerbereich, d.h. wo das Linearlager gebildet werden soll, auch lamellenartige Vorsprünge angeordnet sein, durch die die Betätigungsstange 40 ebenfalls gegenüber dem Innenumfang der Bohrung, in der die Betätigungsstange 40 bewegt werden soll, abgestützt wird. Die lamellenartigen Vorsprünge können beispielsweise geradlinig parallel zur Längsachse der Betätigungsstange 40 verlaufen, oder ebenfalls spiralförmig.

## Patentansprüche

1. Wasserabrasiv-Suspensionschneideeinrichtung, die wenigstens eine Druckerzeugungseinrichtung (2) zur Erzeugung eines gewünschten Wasserdrucks eines Hochdruck-Schneidstrahls (12), wenigstens einen Wasserzulauf zur Zuführung von Reinwasser, wenigstens einen Abrasivmittelbehälter (6) mit Abrasivmittel, wenigstens eine Schneiddüse (11) zum Abgeben des Hochdruck-Schneidstrahls (12) zum Wasserabrasiv-Suspensionschneiden und wenigstens eine Ventileinrichtung (30) zum wahlweisen Zuschalten oder Abschalten des aus der Schneiddüse (11) der Wasserabrasiv-Suspensionsschneideeinrichtung austretenden Hochdruck-Schneidstrahls (12) hat, wobei die Ventileinrichtung (30) wenigstens einen ersten Zuführanschluss (31) für das abrasivhaltige Schneidmedium, wenigstens einen zweiten Zuführanschluss (32) für Reinwasser und einen Auslassanschluss (33) zur Ausgabe von über den ersten und/oder den zweiten Zuführanschluss (31, 32) zugeführten Medien zur Schneiddüse (11) hat, wobei der erste Zuführanschluss (31) mit dem Abrasivmittelbehälter (6) oder einer Zuführleitung (20) für das abrasivhaltige Schneidmedium verbunden ist, der zweite Zuführanschluss (32) mit dem Wasserzulauf verbunden ist und der Auslassanschluss (33) mit der Schneiddüse (11) verbunden ist, **dadurch gekennzeichnet, dass** die Ventileinrichtung (30) wenigstens ein Sitzventil und/oder wenigstens ein Schieberventil und/oder wenigstens ein Kugelventil aufweist, mit dem der Hochdruck-Schneidstrahl (12) wahlweise zuschaltbar oder abschaltbar ist.

2. Wasserabrasiv-Suspensionschneideeinrichtung nach Anspruch 1, **dadurch gekennzeichnet, dass** die Ventileinrichtung (30) eine Betätigungsstange (40) aufweist, durch die ein Ventilkörper (34) des wenigstens einen Sitzventils und/oder wenigstens einen Schieberventils und/oder wenigstens einen Kugelventils mit einem Ventilsteuerelement (50) mechanisch gekoppelt ist, durch das der Ventilkörper (34) von entfernter Stelle in unterschiedliche Öffnungs- und Schließstellungen der Ventileinrichtung (30) stellbar ist.

3. Wasserabrasiv-Suspensionschneideeinrichtung nach Anspruch 2, **dadurch gekennzeichnet, dass** die Ventileinrichtung (30) ein Linearlager (44) aufweist, durch das die Betätigungsstange (40) an einer Position, die näher am Ventilkörper (34) als am Ventilsteuerelement (50) angeordnet ist, in radialer Richtung gelagert ist.

4. Wasserabrasiv-Suspensionschneideeinrichtung nach Anspruch 3, **dadurch gekennzeichnet, dass** das Linearlager (44) einen oder mehrere in Längsrichtung der Betätigungsstange (40) verlaufende Durchgangskanäle (43) aufweist, durch die über den zweiten Zuführanschluss (32) zugeführtes Reinwasser zum Ventilkörper (34) strömen kann.

5. Wasserabrasiv-Suspensionschneideeinrichtung nach Anspruch 4, **dadurch gekennzeichnet, dass** die Durchgangskanäle (34) spiralförmig um den Außenumfang der Betätigungsstange (40) verlaufend angeordnet sind.

6. Wasserabrasiv-Suspensionschneideeinrichtung nach einem der vorhergehenden Ansprüche, **dadurch gekennzeichnet, dass** die Ventileinrichtung (30), insbesondere der Ventilkörper (34), wenigstens eine erste Ventilstellung (a), in der der erste Zuführanschluss (31) mit dem Auslassanschluss (33) verbunden ist und der zweite Zuführanschluss (32) abgesperrt ist, und eine zweite Ventilstellung (c) aufweist, in der der Auslassanschluss (33) gegenüber dem ersten und dem zweiten Zuführanschluss (31, 32) abgesperrt ist.

7. Wasserabrasiv-Suspensionschneideeinrichtung nach Anspruch 6, **dadurch gekennzeichnet, dass** die Ventileinrichtung (30), insbesondere der Ventilkörper (34), wenigstens dritte Ventilstellung (b) aufweist, in der der erste Zuführanschluss (31), der zweite Zuführanschluss (32) und der Auslassanschluss (33) miteinander verbunden sind.

8. Wasserabrasiv-Suspensionschneideeinrichtung nach einem der vorhergehenden Ansprüche, **dadurch gekennzeichnet, dass** die Ventileinrichtung (30) eine Ventilkammer (35) aufweist, in der der Ventilkörper (34) hin und her bewegbar ist.

9. Wasserabrasiv-Suspensionschneideeinrichtung nach Anspruch 8, **dadurch gekennzeichnet, dass** in der Ventilkammer (35) wenigstens eine Schutzwand (42) vorhanden ist, durch die der Ventilkörper (34) in zumindest einer Ventilstellung gegenüber dem über den ersten Zuführanschluss (31) zugeführten abrasivhaltigen Schneidmedium abgedeckt ist.

10. Wasserabrasiv-Suspensionschneideeinrichtung nach einem der vorhergehenden Ansprüche, **dadurch gekennzeichnet, dass** das Sitzventil wenigstens einen ersten Ventilsitz (39) und einen ersten Ventilkörper (34, 34a) mit wenigstens einer dem ersten Ventilsitz (39) zugeordneten ersten konusförmigen Ventilschließfläche (38) aufweist.

11. Wasserabrasiv-Suspensionschneideeinrichtung nach Anspruch 10, **dadurch gekennzeichnet, dass** das Sitzventil einen zweiten Ventilsitz (37) und eine dem zweiten Ventilsitz (37) zugeordnete zweite konusförmige Ventilschließfläche (36) aufweist, die an dem ersten Ventilkörper (34, 34a) oder an einem zweiten Ventilkörper (34b) angeordnet ist.

12. Wasserabrasiv-Suspensionschneideeinrichtung nach einem der Ansprüche 10 bis 11, **dadurch gekennzeichnet, dass** der erste und/oder der zweite Ventilsitz (37, 39) und/oder der erste und/oder der zweite Ventilkörper (34, 34a, 34b) als jeweilige separate Bauteile ausgeführt sind, die lösbar an wenigstens einem weiteren Bauteil der Ventileinrichtung (30) befestigt sind.

## Claims

1. Water abrasive suspension cutting device, comprising at least one pressure generating device (2) for generating a desired water pressure of a high-pressure cutting jet (12), at least one water inlet for supplying pure water, at least one abrasive agent container (6) with abrasive agent, at least one cutting nozzle (11) for discharging the high-pressure cutting jet (12) for water abrasive suspension cutting and at least one valve device (30) for selectively switching on or off the high-pressure cutting jet (12) emerging from the cutting nozzle (11) of the water abrasive suspension cutting device, the valve device (30) having at least one first feed connection (31) for the abrasive-containing cutting medium, at least one second feed connection (32) for clean water and an outlet connection (33) for discharging media supplied via the first and/or the second feed connection (31, 32) to the cutting nozzle (11), the first feed connection (31) being connected to the abrasive medium container (6) or a feed line (20) for the abrasive-containing cutting medium, the second feed connection (32) is connected to the water inlet and the outlet connection (33) is connected to the cutting nozzle (11), **characterized in that** the valve device (30) has at least one seat valve and/or at least one slide valve and/or at least one ball valve, with which the high-pressure cutting jet (12) can be selectively switched on or off.

2. Water abrasive suspension cutting device according to claim 1, **characterized in that** the valve device (30) has an actuating rod (40) by means of which a valve body (34) of the at least one seat valve and/or at least one slide valve and/or at least one ball valve is mechanically coupled to a valve control element (50) by means of which the valve body (34) can be set from a remote position into different opening and closing positions of the valve device (30).

3. Water abrasive suspension cutting device according to claim 2, **characterized in that** the valve device (30) has a linear bearing (44) by means of which the actuating rod (40) is mounted in the radial direction at a position which is arranged closer to the valve body (34) than to the valve control element (50).

4. Water abrasive suspension cutting device according to claim 3, **characterized in that** the linear bearing (44) has one or more through-channels (43) running in the longitudinal direction of the actuating rod (40), through which clean water supplied via the second feed connection (32) can flow to the valve body (34).

5. Water abrasive suspension cutting device according to claim 4, **characterized in that** the through channels (34) are arranged in a spiral around the outer circumference of the actuating rod (40).

6. Water abrasive suspension cutting device according to one of the preceding claims, **characterized in that** the valve device (30), in particular the valve body (34), has at least one first valve position (a), in which the first feed connection (31) is connected to the outlet connection (33) and the second feed connection (32) is shut off, and a second valve position (c), in which the outlet connection (33) is shut off with respect to the first and second feed connection (31, 32).

7. Water abrasive suspension cutting device according to claim 6, **characterized in that** the valve device (30), in particular the valve body (34), has at least a third valve position (b) in which the first feed connection (31), the second feed connection (32) and the outlet connection (33) are connected to one another.

8. Water abrasive suspension cutting device according to one of the preceding claims, **characterized in that** the valve device (30) has a valve chamber (35) in which the valve body (34) can be moved back and forth.

9. Water abrasive suspension cutting device according to claim 8, **characterized in that** at least one protective wall (42) is present in the valve chamber (35), by means of which the valve body (34) is covered in at least one valve position with respect to the abrasive-containing cutting medium supplied via the first feed connection (31).

10. Water abrasive suspension cutting device according to one of the preceding claims, **characterized in that** the seat valve has at least one first valve seat (39) and a first valve body (34, 34a) with at least one first conical valve closing surface (38) associated with the first valve seat (39).

11. Water abrasive suspension cutting device according to claim 10, **characterized in that** the seat valve has a second valve seat (37) and a second conical valve closing surface (36) associated with the second valve seat (37), which is arranged on the first valve body (34, 34a) or on a second valve body (34b).

12. Water abrasive suspension cutting device according to one of claims 10 to 11, **characterized in that** the first and/or the second valve seat (37, 39) and/or the first and/or the second valve body (34, 34a, 34b) are designed as respective separate components which are detachably fastened to at least one further component of the valve device (30).

## Revendications

1. Dispositif de coupe par suspension aqueuse abrasive, comprenant au moins un dispositif de génération de pression (2) pour générer une pression d'eau souhaitée d'un jet de coupe à haute pression (12), au moins une arrivée d'eau pour amener de l'eau pure, au moins un réservoir d'abrasif (6) avec de l'abrasif, au moins une buse de coupe (11) pour délivrer le jet de coupe à haute pression (12) pour la coupe par suspension aqueuse abrasive, et au moins un dispositif de soupape (30) pour activer ou désactiver au choix le jet de coupe à haute pression (12) sortant de la buse de coupe (11) du dispositif de coupe par suspension aqueuse abrasive,
dans lequel
le dispositif de soupape (30) comprend au moins un premier raccord d'alimentation (31) pour le fluide de coupe contenant l'abrasif, au moins un deuxième raccord d'alimentation (32) pour l'eau pure et un raccord de sortie (33) pour la distribution de fluides, amenés par le premier et/ou le deuxième raccord d'alimentation (31, 32), vers la buse de coupe (11),
le premier raccord d'alimentation (31) est relié au réservoir d'abrasif (6) ou à une conduite d'alimentation (20) pour le fluide de coupe contenant l'abrasif, le deuxième raccord d'alimentation (32) est relié à l'arrivée d'eau, et le raccord de sortie (33) est relié à la buse de coupe (11),
**caractérisé en ce que** le dispositif de soupape (30) comprend au moins une soupape à siège et/ou au moins une soupape à tiroir et/ou au moins une soupape à bille, par laquelle le jet de coupe à haute pression (12) peut être activé ou désactivé au choix.

2. Dispositif de coupe par suspension aqueuse abrasive selon la revendication 1,
**caractérisé en ce que** le dispositif de soupape (30) comprend une tige d'actionnement (40) par laquelle un corps de soupape (34) de ladite au moins une soupape à siège et/ou de ladite au moins une soupape à tiroir et/ou de ladite au moins une soupape à bille est couplé mécaniquement à un élément de commande de soupape (50) permettant de positionner, depuis un endroit éloigné, le corps de soupape (34) vers différentes positions d'ouverture et de fermeture du dispositif de soupape (30).

3. Dispositif de coupe par suspension aqueuse abrasive selon la revendication 2,
**caractérisé en ce que** le dispositif de soupape (30) comprend un palier linéaire (44) par lequel la tige d'actionnement (40) est supportée dans la direction radiale à une position plus proche du corps de soupape (34) que de l'élément de commande de soupape (50).

4. Dispositif de coupe par suspension aqueuse abrasive selon la revendication 3,
**caractérisé en ce que** le palier linéaire (44) présente un ou plusieurs canaux de passage (43) s'étendant dans la direction longitudinale de la tige d'actionnement (40), à travers lesquels de l'eau pure amenée par le deuxième raccord d'alimentation (32) peut s'écouler vers le corps de soupape (34).

5. Dispositif de coupe par suspension aqueuse abrasive selon la revendication 4,
**caractérisé en ce que** les canaux de passage (34) sont disposés en spirale autour de la périphérie extérieure de la tige d'actionnement (40).

6. Dispositif de coupe par suspension aqueuse abrasive selon l'une des revendications précédentes,
**caractérisé en ce que** le dispositif de soupape (30), en particulier le corps de soupape (34), présente au moins une première position de soupape (a) dans laquelle le premier raccord d'alimentation (31) est relié au raccord de sortie (33) et le deuxième raccord d'alimentation (32) est obturé, et une deuxième position de soupape (c) dans laquelle le raccord de sortie (33) est obturé par rapport aux premier et deuxième raccords d'alimentation (31, 32).

7. Dispositif de coupe par suspension aqueuse abrasive selon la revendication 6,
**caractérisé en ce que** le dispositif de soupape (30), en particulier le corps de soupape (34), présente au moins une troisième position de soupape (b) dans laquelle le premier raccord d'alimentation (31), le deuxième raccord d'alimentation (32) et le raccord de sortie (33) sont reliés entre eux.

8. Dispositif de coupe par suspension aqueuse abrasive selon l'une des revendications précédentes,
**caractérisé en ce que** le dispositif de soupape (30) comprend une chambre de soupape (35) dans laquelle le corps de soupape (34) est mobile en va-et-vient.

9. Dispositif de coupe par suspension aqueuse abrasive selon la revendication 8,
**caractérisé en ce qu'**il existe dans la chambre de soupape (35) au moins une paroi de protection (42) par laquelle le corps de soupape (34) est recouvert, dans au moins une position de soupape, par rapport au fluide de coupe contenant d'abrasif, amené par le premier raccord d'alimentation (31).

10. Dispositif de coupe par suspension aqueuse abrasive selon l'une des revendications précédentes,
**caractérisé en ce que** la soupape à siège comprend au moins un premier siège de soupape (39) et un premier corps de soupape (34, 34a) avec au moins une première surface de fermeture de soupape (38) de forme conique associée au premier siège de soupape (39).

11. Dispositif de coupe par suspension aqueuse abrasive selon la revendication 10,
**caractérisé en ce que** la soupape à siège comprend un deuxième siège de soupape (37) et une deuxième surface de fermeture de soupape (36) de forme conique associée au deuxième siège de soupape (37), qui est disposée sur le premier corps de soupape (34, 34a) ou sur un deuxième corps de soupape (34b).

12. Dispositif de coupe par suspension aqueuse abrasive selon l'une des revendications 10 à 11,
**caractérisé en ce que** le premier et/ou le deuxième siège de soupape (37, 39) et/ou le premier et/ou le deuxième corps de soupape (34, 34a, 34b) sont réalisés sous forme de composants séparés respectifs qui sont fixés de manière amovible à au moins un autre composant du dispositif de soupape (30).
